# EUROPÄISCHE PATENTSCHRIFT

(11) **EP 0 996 581 B1**
(45) Veröffentlichungstag und Bekanntmachung des Hinweises auf die Patenterteilung: **19.05.2004**
(21) Anmeldenummer: 99914554.3
(22) Anmeldetag: 29.03.1999
(51) Int. Cl.: B65G 1/04, B66F 9/14

(54) **SATELLITENFAHRZEUG ZUM EIN- UND AUSLAGERN VON PALETTENEINHEITEN BEI TRANSPORTFAHRZEUGEN**
SATELLITE VEHICLE FOR MOVING PALLET UNITS IN AND OUT OF STORAGE WITH TRANSPORTATION VEHICLES
VEHICULE SATELLITE POUR L'EMMAGASINAGE ET LE TRANSFERT D'UNITES DE PALETTISATION POUR VEHICULES DE TRANSPORT

(30) Priorität: 03.04.1998 DE 19814941
(43) Veröffentlichungstag der Anmeldung: 03.05.2000
(73) Patentinhaber: Westfalia-WST-Systemtechnik GmbH & Co. KG, 33829 Borgholzhausen (DE)
(72) Erfinder: UPMEYER, Ulrich, D-33829 Borgholzhausen (DE)
(74) Vertreter: Philipp, Matthias, Dr.
(86) Internationale Anmeldenummer: PCT/EP1999/002125
(87) Internationale Veröffentlichungsnummer: WO 1999/051513

(56) Entgegenhaltungen:
- DE-A- 2 930 569
- DE-A- 3 702 918
- DE-U- 29 620 342
- FR-A- 2 725 436
- US-A- 4 595 331

## Beschreibung

Die Erfindung bezieht sich auf ein Satellitenfahrzeug zum Ein- und Auslagern von Paletteneinheiten (Ladeeinheiten) bei Transportfahrzeugen, Containern od. dgl., gemäß dem Oberbegriff des Anspruches 1.

Ein derartiges Satellitenfahrzeug ist aus dem DE 296 20 342 U1 bekannt geworden, bei dem die Gabelzinken zur Längs- und Queraufnahme von Paletten in Gabelzinkenlängsrichtung verschiebbar oder hochklappbar sind, um Paletten quer oder längs aufzunehmen.

Aufgabe der Erfindung ist es, eine einfache Alternative zu dem Stand der Technik zu schaffen, wobei eine Anpassung der Gabelzinken an unterschiedliche Palettensysteme möglich ist, und die Gabelzinken die Paletten derart aufnehmen können, daß sie beim Ein- und Ausladen gegenüber den Seitenbegrenzungen der Transportfahrzeuge od. dgl. beschädigungsfrei ausweichen können und eine optimale Navigation für die Fahrt und Fahrtkorrektur des Satellitenfahrzeuges geschaffen wird.

Diese Aufgabe wird erfindungsgemäß durch die kennzeichnenden Merkmale des Patentanspruches 1 gelöst. Die sich daran anschließenden Unteransprüche beinhalten Gestaltungsmerkmale, welche vorteilhafte und förderliche Weiterbildungen der Aufgabenlösung darstellen.
Das Satellitenfahrzeug gemäß der Erfindung ist mit mindestens zwei, vorzugsweise mehreren seitenverstellbaren Gabelzinken ausgestattet, so daß die Gabelzinken auf unterschiedliche Palettensysteme eingerichtet werden können und somit verschiedene Palettentypen vom Satellitenfahrzeug aufgenommen und transportiert werden können.

Weiterhin sind die Gabelzinken mit schwimmenden Palettenaufnahmen ausgestattet, die eine Bewegung der Paletten quer zu der Zinkenlängsrichtung in einem begrenzten Bereich zulassen, so daß beim Einladen und Ausladen der Paletten diese bei Berührung mit den Seitenbegrenzungen des Transportfahrzeuges ausweichen können und somit Beschädigungen am Transportfahrzeug bzw. am Ladegut ausgeschlossen wird.

Weiterhin ist das Satellitenfahrzeug mit mehreren Ultraschallsensoren, einer Kabeltrommel mit Stahlseil, in der Energie- und Signalkabel eingebunden sind, einem integrierten Schaltschrank und einem elektronischen Kompaß ausgestattet, wodurch eine meßbare, korrigierbare und einwandfreie Fahrt des Satellitenfahrzeuges gegenüber dem zu beladenen und zu entladenen Fahrzeug auch bei Mittenversatz oder Schrägstellung der Ladefläche erreicht wird. Die Messung mit den Ultraschallsensoren erfolgt über Referenzkanten und die Signale werden direkt an den Schaltschrank zur Auswertung weitergegeben. Das von der Kabeltrommel abrollende Energie- und Signalkabel dient gleichzeitig noch zur Wegmessung. Ein weiterer Vorteil der Erfindung ist die Antriebsverbindung vom mittigen Antriebsmotor auf vier Antriebs- und Lenkräder, wobei die inneren Räder über eine Antriebswelle mit dem Antriebsmotor verbunden und die beiden seitlichen Radpaare mit je einer Kadarnwelle gekuppelt sind, so daß alle vier Räder durch einen mittigen Drehschemel in die Lenkstellung gebracht werden, was ein verschleißarmes Lenken ergibt.

Das gesamte Satellitenfahrzeug ist verhältnismäßig einfach und kostengünstig aufgebaut und hat eine äußerst variable Arbeitsweise, sowohl in der Aufnahme der unterschiedlichen Palettensysteme, als auch in der Ladebewegung, so daß mit diesem Satellitenfahrzeug eine gesteigerte Wirkungsweise in der Ein- und Auslagertechnik erreicht worden ist.

Anhand der Zeichnungen wird nachfolgend ein Ausführungsbeispiel der Erfindung näher erläutert. Es zeigt:
- Fig. 1: eine schematische Seitenansicht eines Gabel-Hubwagens mit einer von seinen Gabelzinken aufgenommenen Paletteneinheit;
- Fig. 2: eine schematische Draufsicht auf den Gabel-Hubwagen mit sechs Gabelzinken;

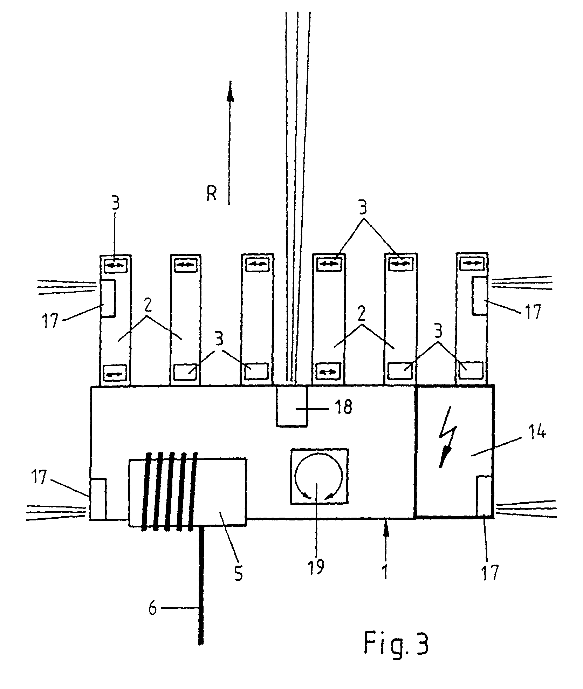

- Fig. 3: eine schematische Draufsicht auf den Gabel-Hubwagen mit schwimmenden Palettenaufnahmen auf den Gabelzinken und Sensoren sowie einen elektronischen Kompaß, einem Schaltschrank und einer Kabeltrommel;
- Fig. 4: eine schematische Draufsicht auf den in einer Ausgangsposition stehenden Gabel-Hubwagen, einem Querförderer und zwei versetzt stehenden Transportfahrzeuge und Referenzkanten zur Fahrwegsteuerung des Gabel-Hubwagens.

Die schienenunabhängige Be- und Entladevorrichtung zur automatischen heckseitigen und seitlichen Be- und Entladung der Ladefläche von Transportfahrzeugen (F), wie Lastkraftwagen, Anhängern, oder auch Containern mit Ladeeinheiten (P) - Paletteneinheiten (P)- ist als Satellitenfahrzeug (Ladefahrzeug) in Form eines motorisch angetriebenen Gabel-Hubwagens (1) mit mehreren parallelen, höhenverfahrbaren (anheb- und absenkbaren) und gegenüber der Palette (P) bzw. Paletteneinheiten (P) lageveränderbaren Gabelzinken (2) ausgeführt.

Mindestens zwei Gabelzinken (2) sind quer zur Zinken-Längsrichtung seitenverfahrbar am Hubwagen (1) gelagert, so daß sie an unterschiedliche Palettensysteme angepaßt werden können. In bevorzugter Weise sind mehrere Gabelzinken (2) einzeln oder paarweise seitenverfahrbar vorgesehen.

Der Hubwagen (1) ist mit sechs Gabelzinken (2) bestückt, von denen die beiden äußeren Gabelzinken (2) feststehend und die vier dazwischenliegenden Gabelzinken (2) einzeln oder paarweise in beide Querrichtungen (Q) seitenverfahrbar sind.

Die Gabelzinken (2) lassen sich durch mindestens einen Elektromotor oder Druckmittelmotor pneumatisch oder hydraulisch stufenlos in einem begrenzten Bereich querverstellen. Die seitenverfahrbaren Gabelzinken (2) sind an oder in Führungen des Hubwagens (1) verschiebegeführt gelagert und werden durch ihren Verstellmotor in der jeweiligen Lage fixiert. Die Gabelzinken (2) weisen quer zur Zinken-Längsrichtung linear begrenzt hin- und herfahrbare, schwimmende Palettenaufnahmen (3) mit Mittenzentrierungen auf.

Diese Palettenaufnahmen (3) sind von Linearbausteinen und die Mittenzentrierungen werden von Rückholgliedern, wie Rückholfedern, Elektro- oder Druckmitteltrieben od. dgl. gebildet.

Jeder Gabelzinken (2) hat am vorderen und am hinteren Ende einen schwimmenden Linearbaustein (3).

Die Gabelzinken (2) lassen sich auch mit klappbaren Tastanschlägen ausstatten, um auch kürzere Paletten (P) mit der Vorderkante der Gabeln (2) abschließen zu lassen. Die mechanischen Klappanschläge können sowohl mechanisch durch die seitliche Gabel-Verschieblichkeit als auch separat motorisch oder hydraulisch betätigt werden.

Während des Beladevorganges kann es aufgrund von zulässigen Abweichungen vom Hubwagen-Fahrkurs bzw. von den Seitenbegrenzungen (Seitenwänden, Planken) des Transportfahrzeuges (F) zu seitlichen Berührungen der Ladeeinheiten (P) mit den Ladebereichsbegrenzungen und damit auch bei zu großem Druck zu Beschädigungen an der Kontaktstelle sowohl an der Ladung (P) als auch am Transportfahrzeug (F) kommen. Durch die auf den Gabelzinken (2) quer zur Zinkenrichtung angeordneten "schwimmenden" Palettenaufnahmeflächen (3) können sich die Ladeeinheiten (P) seitlich begrenzt querverschieben und so den Berührungsdruck der Ladeeinheiten (P) mit der Kontaktfläche erheblich mindern. Läßt der seitliche Druck nach, so wird die Ladeeinheit (P) wieder auf die Mittelstellung durch die elektromotorischen, pneumatischen, hydraulische Rückholglieder oder gegenüber angeordneten Federn zentriert.

Um mehrere Beladetore mit einem Gabel-Hubwagen (1) bedienen zu können, wird der Hubwagen (1) auf kürzestem Weg in mehrere Beladepositionen auf einem Querförderer (4), wie Plattenband-, Ketten- oder Gurtförderer, transportiert. Dieser Querförderer (4) transportiert auch die Ladeeinheiten (P) in die Übergabeposition zum Hubwagen (1).

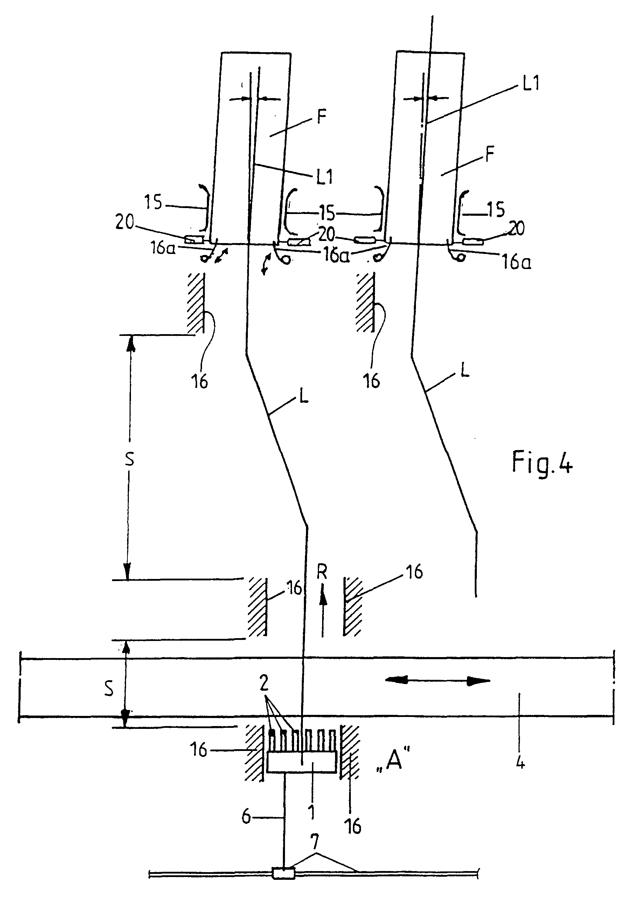

Der Querförderer (4) als Gutförderer kann sowohl als umlaufendes Band (Rücktrum im Boden versenkt) als auch als wechselweise auf- und abwickelbarer Gurt ausgeführt werden.
Der Hubwagen (1) weist eine integrierte Kabeltrommel (5) mit elektrischen Versorgungs- und Steuersignalkabeln (6) auf und dieses Kabel (6) ist für die Hubwagen-Querfahrt an ein Schleppkabel- (7) oder Energiekettensystem (7) angeschlossen (Fig. 4).

Der Gabel-Hubwagen (1) wird über die integrierte Kabeltrommel (5) mit Energie und Steuersignalen versorgt. Die Befestigung der Kabeltrommel (5) auf dem Hubwagen (1) bewirkt eine erhebliche Verschleißminderung der Kabelummantelung durch den Abrolleffekt. Durch das Querverfahren des Hubwagen (1) ist es erforderlich, daß die Kabeleinspeisung zum Hubwagen (1) auch querverfahrbar konzipiert ist.

Es können auch mehr als eine Kabeltrommel (5) -z.B. 2 Stück- mit Stahlseil Verwendung finden, um die Energieeinspeisung aufzuteilen und somit können dann auch dünnere Kabel (6) verwendet werden. Die Kabel (6) werden durch Stillstandsmotore beim Ab- und Aufwickeln straff gehalten.

Die Kabeleinspeisung kann sowohl über ein parallel zum Querförderer (4) angeordnetes Schleppkabel- (7) als auch über ein Energieketten-System (7) erfolgen.

Die Schleppkabelbewegung läßt sich durch einen Reibradantrieb unterstützen. Der Start und der Stop dieser Bewegung wird durch das seitlich schräg gestellte Kabel (6) über einen davon betätigten Schalter veranlaßt. Durch die Gurtbewegung wird das Kabel (6) schräg gezogen; bei geringer Schrägstellung des Kabels (6) wird ein Schalter betätigt, der den Reibantrieb des Schleppkabels (6) startet.

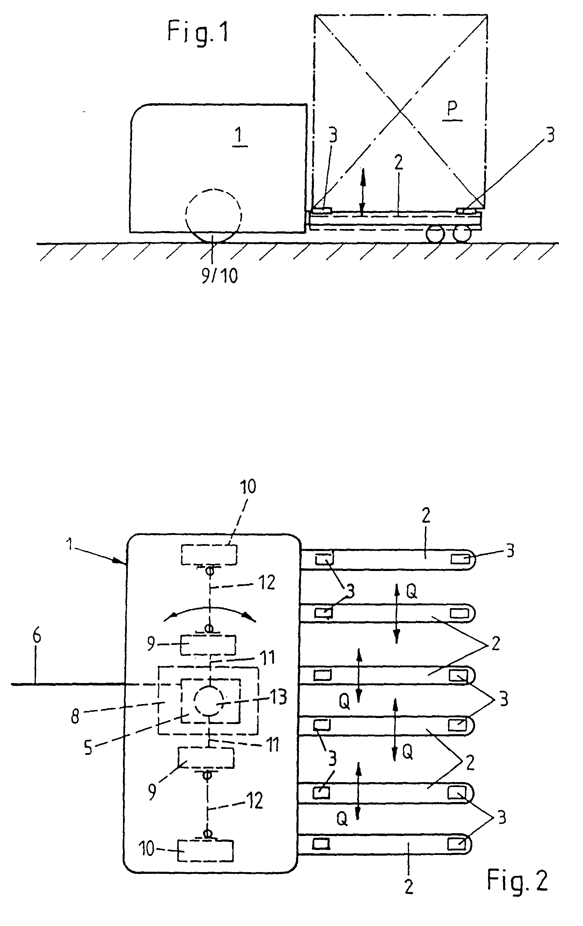

Der Hubwagen (1) besitzt einen mittigen Antriebsmotor (8) zum Antrieb von vier jeweils paarweise beiderseits des Antriebsmotors (8) angeordnete Laufräder (9, 10); die beiden inneren Laufräder (9) sind über eine Antriebsachse (11) mit dem Antriebsmotor (8) verbunden und das innere und äußere Laufrad (9, 10) -Laufradpaar- sind jeweils durch eine Kardanwelle (12) gekuppelt. Alle vier Laufräder (9, 10) werden gemeinsam um einen Drehschemel (13) des Hubwagen (1) zum Lenken verdreht (Fig. 2). Der Mittelantrieb (8) erhält über die Kabeltrommel (5) seine Antriebsenergie. Diese Räder-Verbindung ergibt eine Verteilung der Antriebskraft auf mehrere Räder (9, 10), wodurch eine bessere Kraftverteilung auf dem Fahruntergrund erreicht wird.

Anstelle eines Mittelantriebes (8) können auch die beiden äußeren Räderpaare (10) jeweils mit einem Antrieb (8) versehen werden. Die Gleichlaufregelung erfolgt über die Steuerung des Fahrzeuges. Durch unterschiedliches Ansteuern der beiden Antriebe kann auch der Wendekreis des Fahrzeuges beeinflußt werden.

Die Drehlgarung der Antriebs- und Stützräder (9, 10) kann auch vertikal verschiebbar (durch Hydraulik- oder Federdruck) den Bodenverhältnissen angepaßt werden (Niveauunterschiede in der Oberfläche). Die Anpreßkraft ist den Erfordernissen entsprechend variabel.

Der Hubwagen (1) weist einen integrierten Schaltschrank (1) für eine direkte Signalverarbeitung auf, der bei Mitten- oder Schrägversatz der Transportfahrzeuge (F) zum Ladetor den von seitlich vor dem Ladetor angebrachten Ultraschallsensoren gemessenen Versatz als Signal zur Fahrtrichtungskorrektur des Hubwagens (1) erhält.

Beim rückwärtigen Andocken der Transportfahrzeuge (F) am Ladetor kommt es trotz vorhandener Rangierhilfsmittel (15), wie Einweiser etc. zu einem seitlichen Mittenversatz der Ladefläche des Transportfahrzeuges (F) gegenüber der Ladetormitte.

Dieser Versatz wird durch seitlich vor dem Tor angebrachte Ultraschallsensoren (20) in Verbindung mit Referenzkanten (16) gemessen und der Hubwagen-Steuerung (14) zur Fahrtrichtungskorrektur mitgeteilt.

Durch diese direkte Signalverarbeitung im integrierten Schaltschrank (14) werden folgende Vorteile erreicht: kürzestmögliche Sensor-, Signal- und Motorleitungen, dadurch schnellere Verarbeitung der Signale, minimale Adernzahl im Versorgungskabel (6) und reduzierter Verdrahtungsaufwand.

In Figur 4 ist die Korrektur der Fahrt (in Fahrtrichtung R) des Hubwagens (1) von der Ausgangsposition (A) zu dem versetzten Transportfahrzeug (F) -dessen Ladefläche- in der Fahrstrecke (L) und um die korrigierte Fahrlinie (L1) gezeigt; dem Transportfahrzeug (F) sowie dem Hubwagen (1) vor und hinter dem Querförderer (4) sind Referenzkanten (16) für die Ultraschallsensoren zugeordnet. Die in die Ladeöffnung des Transportfahrzeuges (F) einschwenkbaren Referenzkanten (16 a) haben gleichzeitig noch die Funktion einer Einfahrhilfe für das Ladefahrzeug.

Zur Navigation des Satellitenfahrzeuges ist der Hubwagen (1) und sind die Gabelzinken (2) mit seitlichen Ultraschallsensoren (17) für die Geradfahrtmessung des Hubwagen (1), der Hubwagen (1) mit einem in Fahrtrichtung (R) wirkenden Ultraschallsensor (18) für die Fahrt-Tiefenmessung und einem Drehratensensor (19) zur Winkelmessung ausgestattet.

Die Hubwagen-Navigation erfolgt somit über Ultraschallsensoren (17, 18) bzw. Induktionsschleifen, die Wegmessung wird am abrollenden Versorgungskabel (6) und die Winkelmessung über den elektronischen Kompaß (Drehratensensor 19) vorgenommen. Hierdurch wird ein optimaler Geradauslauf erreicht sowie Abweichungen der Ladeflächenumrandung von der Idealkontur sowie Positionierfehler des Transportfahrzeuges (F) und Bodenunebenheiten kompensiert. Weiterhin wird das Überqueren freier Flächen (Strecken S) und eine vordefinierte Kurvenfahrt möglich.

Die Wegmessung kann auch durch Wegaufnehmer mittels im Boden eingelassene Magnete erfolgen.

Der Hubwagen (1) kann in Fahrtrichtung (R) zwischen den jeweils vorderen und hinteren beidseitigen Referenzkanten (16) auf den Strecken (S) frei fahren.
An den vorderen Referenzkanten (16) erfolgt dabei über die Sensoren (17) ein Abmeldesignal zur freien Weiterfahrt (S) und an den hinteren Referenzkanten (16) ein Anmeldesignal, wodurch der Hubwagen (1) vom Schaltschrank (16) wieder in der Fahrt gesteuert wird.

Das Hubwagen-Navigationsverfahren benutzt die Technik der virtuellen Leitlinie. Dabei wird eine Fahrstrecke punktweise in kartesischen Koordinaten vorgegeben, die z. B. durch ein CAD-Programm, einen Lernvorgang oder andere Verfahren ermittelt wurden. Zusätzlich zu diesen Koordinaten werden Referenz-Koordinaten vorgegeben, durch die der Hubwagen (1) eine Abweichung seiner aus Sensorwerten berechneten Position von der tatsächlichen Position ermitteln kann. Von der Hubwagen-Steuerung werden zur Referenzierung seitliche Wegbegrenzungen (16) durch die Sensoren (17) erfaßt.
Während der Fahrt wird ständig die aktuelle Position des Hubwagen (1) aus dem gefahrenen Weg und der Fahrzeugdrehung berechnet. Die daraus aktuell berechnete Position des Hubwagen (1) wird mit der vorgegebenen Fahrstrecke verglichen, die Regelabweichung festgelegt und somit auch der Streckenabschnitt bestimmt, in dem sich der Hubwagen (1) gerade befindet.
Eine Schrägstellung eines zu beladenen leeren Transportfahrzeuges (F) wird durch eine Leerfahrt des Hubwagen (1) nach dem vorher beschriebenen Verfahren ermittelt und als aktuelle Fahrroute für die Beladung hinterlegt. Beim Entladen eines Transportfahrzeuges (F) werden die Konturen der Ladefläche stückweise nach Entladefortschritt abgetastet und so Zug um Zug die Schrägstellung des Transportfahrzeuges (F) ermittelt.

Das parallel zum Querförderer (4) angeordnete Schleppkabel (7) kann auch oberhalb der Ladetoröffnung angebracht werden; dadurch ist hinter dem Ladefahrzeug (F) kein Platzbedarf.

## Patentansprüche

1. Satellitenfahrzeug zum Ein- und Auslagern von Paletteneinheiten bei Transportfahrzeugen, mit einem motorischen angetriebenen Hubwagen mit mehreren parallel nebeneinanderliegenden, höhenverfahrbaren und gegenüber der Palette lageveränderbaren Gabelzinken, wobei der Hubwagen (1) mit Ultraschallsensoren (17, 18) zur Fahrtrichtungmessung und -korrektur sowie einer Kabeltrommel (5) mit Energie- und Signalkabel (6) zur Antriebsstromversorgung und zum Signalaustausch sowie zur Wegmessung ausgerüstet ist, **dadurch gekennzeichnet, daß**
- mindestens zwei Gabelzinken (2) quer zur Zinken-Längsrichtung seitenverfahrbar am Hubwagen (1) gelagert sind,
- alle Gabelzinken (2) mit quer zur Zinken-Längsrichtung schwimmenden Palettenaufnahmen (3) ausgestattet sind,
und
- auch die Gabelzinken (2) mit Ultraschallsensoren (17, 18) zur Fahrtrichtungmessung und -korrektur und der Hubwagen (1) mit einem Drehratensensor (19) zur Winkelmessung ausgerüstet sind.

2. Satellitenfahrzeug nach Anspruch 1, **dadurch gekennzeichnet, daß** mehrere Gabelzinken (2) einzeln oder paarweise seitenverfahrbar vorgesehen sind.

3. Satellitenfahrzeug nach Anspruch 1 oder 2, **dadurch gekennzeichnet, daß** am Hubwagen (1) sechs Gabelzinken (2) vorgesehen sind, von denen die beiden äußeren Gabelzinken (2) feststehend und die vier dazwischen liegenden Gabelzinken (2) einzeln oder paarweise in beide Querrichtungen (Q) seitenverfahrbar sind.

4. Satellitenfahrzeug nach einem der Ansprüche 1 bis 3, **dadurch gekennzeichnet, daß** die seitenverfahrbaren Gabelzinken (2) elektromotorisch, pneumatisch oder hydraulisch querverstellbar sind.

5. Satellitenfahrzeug nach einem der Ansprüche 1 bis 3, **dadurch gekennzeichnet, daß** die Gabelzinken (2) mit quer zur Zinken-Längsrichtung linear begrenzt hin- und herfahrbaren, schwimmenden Palettenaufnahmen (3) mit Mittenzentrierungen ausgestattet sind.

6. Satellitenfahrzeug nach einem der Ansprüche 1 bis 5, **dadurch gekennzeichnet, daß** die Palettenaufnahmen (3) von Linearbausteinen und die Mittenzentrierungen von Rückholgliedern, wie Rückholfedern, Elektro- oder Druckmitteltrieben, gebildet sind.

7. Satellitenfahrzeug nach einem der Ansprüche 1 bis 6, **dadurch gekennzeichnet, daß** jeder Gabelzinken (2) am vorderen und hinteren Ende einen schwimmenden Linearbaustein (3) aufweist.

8. Satellitenfahrzeug nach einem der Ansprüche 1 bis 7, **gekennzeichnet durch** einen das Satellitenfahrzeug (1) in mehrere Beladepositionen und Paletteneinheiten (P) in die Übergabeposition zum Satellitenfahrzeug (1) transportierenden Querförderer (4), wie Plattenband-, Ketten- oder Gurtförderer.

9. Satellitenfahrzeug nach einem der Ansprüche 1 bis 8, **dadurch gekennzeichnet, daß** der Hubwagen (1) eine integrierte Kabeltrommel (5) mit elektrischen Versorgungs- und Steuersignalkabeln (6) aufweist und dieses Kabel (6) für die Hubwagen-Querfahrt an ein Schleppkabel- oder Energiekettensystem (7) angeschlossen ist.

10. Satellitenfahrzeug nach einem der Ansprüche 1 bis 9, **dadurch gekennzeichnet, daß** der Hubwagen (1) einen mittigen Antriebsmotor (8) zum Antrieb von vier jeweils paarweise beiderseits des Antriebsmotors (8) angeordnete Laufräder (9, 10) aufweist, dabei die beiden inneren Laufräder (9) über eine Antriebsachse (11) mit dem Antriebsmotor (8) verbunden und das innere und äußere Laufrad (9, 10) - Laufradpaar- jeweils durch eine Kardanwelle (12) gekuppelt ist und alle vier Laufräder (9, 10) gemeinsam um einen Drehschemel (13) des Hubwagens (1) zum Lenken verdrehbar sind.

11. Satellitenfahrzeug nach einem der Ansprüche 1 bis 10, **dadurch gekennzeichnet, daß** der Hubwagen (1) einen integrierten Schaltschrank (14) für eine direkte Signalverarbeitung aufweist, der bei Mitten- oder Schrägversatz der Transportfahrzeuge (F) zum Ladetor den von seitlich vor dem Ladetor angebrachten Ultraschallsensoren (20) in Verbindung mit Referenzkanten (16, 16a) gemessenen Versatz als Signal zur Fahrtrichtungskorrektur des Hubwagens (1) erhält.

12. Satellitenfahrzeug nach einem der Ansprüche 1 bis 11, **dadurch gekennzeichnet, daß** zur Navigation des Satellitenfahrzeuges (1) der Hubwagen (1) und die Gabelzinken (2) mit seitlichen Ultraschallsensoren (17) für die Geradfahrmessung, der Hubwagen (1) mit einem in Fahrtrichtung (R) wirkenden Ultraschallsensor (18) für die Fahrt-Tiefenmessung und einem Drehratensensor (19) zur Winkelmessung ausgestaltet ist.

13. Satellitenfahrzeug nach einem der Ansprüche 1 bis 12, **dadurch gekennzeichnet, daß** seitliche, in die Ladeöffnung des Transportfahrzeuges (F) einschwenkbare Referenzkanten (16a) als bewegliche Einfahrhilfen für das Transportfahrzeug (F) vorgesehen sind.

14. Satelittenfahrzeug nach einem der Ansprüche 1 bis 13, **dadurch gekennzeichnet, daß** die Gabelzinken (2) mechanische, herausklappbare Tastanschläge aufweisen, um kürze Paletten (P) mit der Vorderkante der Gabelzinken (2) abschließen zu lassen.

15. Satelittenfahrzeug nach einem der Ansprüche 1 bis 14, **dadurch gekennzeichnet, daß** der Hubwagen (12) zwei Kabeltrommeln (5) mit Stahlseil aufweist und dabei die Energieeinspeisung auf dünnere Versorgungskabel (6) aufgeteilt ist und die Kabel (6) durch Stillstandsmotore beim Auf- und Abwickeln straff gehalten werden.

16. Satelittenfahrzeug nach einem der Ansprüche 1 bis 15, **dadurch gekennzeichnet, daß** die beiden äußeren Räderpaare (10) des Hubwagens (1) mit je einem Antrieb (8) gekuppelt sind.

17. Satelittenfahrzeug nach einem der Ansprüche 1 bis 16, **dadurch gekennzeichnet, daß** die Schleppkabelbewegung von einem Reibradantrieb unterstützt ist, wobei der Start und Stop dieser Bewegung durch das schräggestellte Kabel (6) über einen davon betätigten Schalter erfolgt.

18. Satelittenfahrzeug nach einem der Ansprüche 1 bis 17, **dadurch gekennzeichnet, daß** die Drehlagerung der Antriebs- und Stützräder (9, 10) durch Hydraulik- oder Federdrucke den Bodenverhältnissen anpaßbar im Hubwagen (1) vertikal verschiebbar vorgesehen ist.

## Claims

1. An auxiliary vehicle for inserting and removing pallet units from transport vehicles, comprising a motor-driven lift truck with a number of parallel adjacent fork tines which can be movable vertically and relative to the pallet, wherein the lift truck is equipped with ultrasonic sensors (17, 18) for measuring and correcting the direction of travel and with a cable drum comprising energy and signal cables (6) for supplying drive current, exchanging signals and recording the mileage, **characterised in that**
- at least two tines (2) are mounted on the lift truck so as to be laterally movable transversely of the longitudinal direction of the tines,
- all the tines (2) are equipped with floating pallet holders (3) transversely of the longitudinal direction of the tines and
- the tines (2) are equipped with ultrasonic sensors (17, 18) for measuring and correcting the direction of travel and the lift truck is equipped with a revolution-rate sensor (19) for angle measurement.

2. An auxiliary vehicle according to claim 1, **characterised in that** a number of fork tines (2) are laterally movable, individually or in pairs.

3. An auxiliary vehicle according to claim 1 or 2, **characterised in that** six tines (2) are provided on the lift truck, the two outer tines (2) being fixed and the four tines (2) in between being laterally movable individually or in pairs in both transverse directions (Q).

4. A satellite vehicle according to any of claims 1 to 3, **characterised in that** the laterally movable tines (2) are transversely movable by an electric motor or by pneumatic or hydraulic means.

5. An auxiliary vehicle according to any of claims 1 to 3, **characterised in that** the tines (2) are equipped with floating pallet holders (3) movable in reciprocation to a limited extent in line with the longitudinal direction of the tines and with middle-centring means.

6. An auxiliary vehicle according to any of claims 1 to 5, **characterised in that** the pallet holders (3) are made up of linear components and the middle-centring means are made up of return elements such as return springs or electric or pressure-medium drives.

7. An auxiliary vehicle according to any of claims 1 to 6, **characterised in that** each tine (2) has a floating linear component (3) at the front and rear end.

8. A satellite vehicle according to any of claims 1 to 7, **characterised by** a transverse conveyor (4), such as a platform or chain or belt conveyor, for conveying the auxiliary vehicle (1) into a number of loading positions and for moving pallet units (P) into the position for delivery to the auxiliary vehicle (1).

9. An auxiliary vehicle according to any of claims 1 to 8, **characterised in that** the lift truck (1) has an incorporated cable drum (5) with electric supply and control-signal cables (6), and the cable (6) for transverse motion of the lift truck is connected to a trailing-cable or energy-chain system (7).

10. An auxiliary vehicle according to any of claims 1 to 9, **characterised in that** the lift truck (1) has a central drive motor (8) for driving four wheels (9, 10) disposed in pairs on each side of the drive motor (8), the two inner wheels (9) being connected to the drive motor (8) by a drive shaft (11) and the inner and outer wheel or pair (9, 10) are coupled by a universally jointed shaft (12) and all four wheels (9, 10) are rotatable around a swivelling bolster (13) of the lift truck (1) for the purpose of steering.

11. An auxiliary vehicle according to any of claims 1 to 10, **characterised in that** the lift truck (1) has an incorporated switchbox (14) for direct signal processing, and if the transport vehicles (F) are centrally or obliquely offset relative to the loading gate, the switchbox receives a signal for correcting the direction of travel of the lift truck (1), the signal showing the offset measured by ultrasonic sensors (20) at the side of the loading gate in conjunction with reference edges (16, 16a).

12. An auxiliary vehicle according to any of claims 1 to 11, **characterised in that** in order to steer the auxiliary vehicle (1), the lift truck (1) and the fork tines (2) are provided with lateral ultrasonic sensors (17) for measuring travel straight ahead and the lift truck (1) is provided with an ultrasonic sensor (18) operative in the direction (R) of travel in order to measure the depth of travel, and with a revolution-rate sensor (19) for angle measurement.

13. An auxiliary vehicle according to any of claims 1 to 12, **characterised in that** movable aids for entering the transport vehicle (F) are provided in the form of lateral reference edges (16a) which can be swung into the loading opening of the vehicle (F).

14. An auxiliary vehicle according to any of claims 1 to 13, **characterised in that** the tines (2) comprise mechanical scanning stops which can be swung outwards in order to bring short pallets (P) into line with the front edge of the tines (2).

15. An auxiliary vehicle according to any of claims 1 to 14, **characterised in that** the lift truck (12) has two cable drums (5) with steel cable and the energy supply is divided among thinner supply cables (6) and the cables (6) are held tight by stopping motors when wound and unwound.

16. An auxiliary vehicle according to any of claims 1 to 15, **characterised in that** the two outer pairs of wheels (10) on the lift truck (1) are each coupled to a drive (8).

17. An auxiliary vehicle according to any of claims 1 to 16, **characterised in that** the trailing cable movement is assisted by a friction-wheel drive, the movement being started and stopped by the obliquely-positioned cable (6) via a switch actuated thereby.

18. An auxiliary vehicle according to any of claims 1 to 17, **characterised in that** the rotary means for mounting the drive wheels and the supporting wheels (9, 10) by hydraulic or spring pressure are provided in the fork truck (1) so as to be vertically movable and adapted to the ground.

## Revendications

1. Véhicule satellite pour l'entrée et sortie de stock d'unités de palettisation pour des véhicules de transport, avec un chariot de levage à entraînement motorisé, muni d'une pluralité de dents de fourche placées parallèlement les unes à côté des autres, déplaçables en hauteur et à position modifiable par rapport à la palette, le chariot de levage (1) étant équipé de capteurs à ultrasons (17, 18) pour la mesure et la correction de la direction de déplacement, ainsi que d'un tambour à câble (5) avec un câble d'énergie et de signalisation (6) pour l'alimentation électrique de d'entraînement et pour l'échange de signaux ainsi que pour la mesure de distance, **caractérisé en ce qu'**
- au moins deux dents de fourche (2) sont montées sur le chariot de levage (1), de façon déplaçable latéralement transversalement par rapport à la direction longitudinale des dents,
- toutes les dents de fourche (2) sont munies de supports à palette (3), flottant transversalement par rapport à la direction longitudinale des dents,
et
- également les dents de fourche (2) sont munies de capteurs à ultrasons (17, 18), pour la mesure et la correction de la direction de déplacement et le chariot de levage (1) est muni d'un capteur de vitesse de rotation (19) pour la mesure angulaire.

2. Véhicule satellite selon la revendication 1, **caractérisé en ce qu'**une pluralité de dents de fourche (2) sont prévues de façon déplaçable latéralement, individuellement ou par paires.

3. Véhicule satellite selon la revendication 1 ou 2, **caractérisé en ce que**, sur le chariot de levage (1), sont prévues six dents de fourche (2), dont les deux dents de fourche extérieures (2) sont fixes et les quatre dents de fourche (2) intercalaires sont déplaçables latéralement, dans les deux directions transversales (Q), individuellement ou par paires.

4. Véhicule satellite selon l'une des revendications 1 à 3, **caractérisé en ce que** les dents de fourche (2) déplaçables latéralement sont manoeuvrables transversalement par moteur électrique, par voie pneumatique ou hydraulique.

5. Véhicule satellite selon l'une des revendications 1 à 3, **caractérisé en ce que** les dents de fourche (2) sont munies de supports à palette (3) flottants, comprenant des centrages en position centrale, déplaçables dans un sens et dans l'autre de façon limitée et linéaire, transversalement par rapport à la direction longitudinale des dents.

6. Véhicule satellite selon l'une des revendications 1 à 5, **caractérisé en ce que** les supports à palette (3) sont formés par des composants linéaires et les centrages en position centrale sont formés par des organes de rappel, tels que des ressorts de rappel, des transmissions électriques ou faisant appel à un fluide sous pression.

7. Véhicule satellite selon l'une des revendications 1 à 6, **caractérisé en ce que** chaque dent de fourche (2) présente, sur l'extrémité avant et l'extrémité arrière, un composant pour mouvement linéaire (3) flottant.

8. Véhicule satellite selon l'une des revendications 1 à 7, **caractérisé par** un transporteur transversal (4), tel qu'un transporteur à bande formée de plaques, à chaîne ou à courroie, assurant le transport du véhicule satellite (1) en plusieurs positions de chargement et le transport d'unités de palettisation (P) à la position de transfert au véhicule satellite (1).

9. Véhicule satellite selon l'une des revendications 1 à 8, **caractérisé en ce que** le chariot de levage (1) présente un tambour à câble (5) intégré, avec des câbles d'alimentation électrique et de signalisation de commande (6), et ce câble (6), prévu pour le déplacement transversal du chariot de levage, étant raccordé à un système à câble remorqué ou un système à chaîne d'énergie (7).

10. Véhicule satellite selon l'une des revendications 1 à 9, **caractérisé en ce que** le chariot de levage (1) présente un moteur d'entraînement (8) central, pour l'entraînement de quatre roues mobiles (9, 10), disposées chaque fois par paires des deux côtés du moteur d'entraînement (8), les deux roues mobiles (9) intérieures étant alors reliées au moteur d'entraînement (8), par l'intermédiaire d'un axe d'entraînement (11), et la roue mobile intérieure et la roue mobile extérieure (9, 10) étant respectivement accouplées - en formant une paire de roues - par un arbre à cardan (12), et la totalité des quatre roues mobiles (9, 10) étant susceptible de tourner conjointement autour d'une sellette (13) du chariot de levage (1), dans le but d'une manoeuvre directionnelle.

11. Véhicule satellite selon l'une des revendications 1 à 10, **caractérisé en ce que** le chariot de levage (1) présente une armoire de commande (14) intégrée, pour un traitement direct des signaux, armoire qui, en cas de décalage par rapport au centre de décalage oblique, des véhicules de transport (F) par rapport à la porte de chargement, reçoit, en tant que signal servant à la correction de direction de déplacement du chariot de levage (1), une indication du décalage, mesurée par des capteurs à ultrasons (20) montés latéralement devant la porte de chargement, en liaison avec des arêtes de référence (16, 16a).

12. Véhicule satellite selon l'une des revendications 1 à 11, **caractérisé en ce que**, pour assurer la navigation du véhicule satellite (1), le chariot de levage (1) et les dents de fourche (2) sont munis de capteurs à ultrasons (17) latéraux, pour la mesure du déplacement en ligne droite, le chariot de levage (1) est muni d'un capteur à ultrasons (18) agissant dans la direction de roulage (R), pour la mesure de profondeur de roulage, et d'un capteur de vitesse de rotation (19), pour la mesure d'angle.

13. Véhicule satellite selon l'une des revendications 1 à 12, **caractérisé en ce que** des arêtes de référence (16a) latérales, rétractables par pivotement dans l'ouverture de chargement du véhicule de transport (F), sont prévues en tant qu'aides mobiles à la pénétration pour le véhicule de transport (F).

14. Véhicule satellite selon l'une des revendications 1 à 13, **caractérisé en ce que** les dents de fourche (2) présentent des butées de palpage mécaniques, déployables par rabattement, pour pouvoir venir au contact de courtes palettes (P) par l'arête avant des dents de fourche (2).

15. Véhicule satellite selon l'une des revendications 1 à 14, **caractérisé en ce que** le chariot de levage (12) présente deux tambours à câble (5) munis d'un câble en acier, et l'alimentation en énergie étant alors répartie sur des câbles d'alimentation (6) plus mince, et les câble (6) étant maintenus en état de raideur, lors de l'enroulement et du déroulement, par des moteurs d'immobilisation à vitesse nulle.

16. Véhicule satellite selon l'une des revendications 1 à 15, **caractérisé en ce que** les deux paires de roues extérieures (10) du chariot de levage (1) sont respectivement couplées à un dispositif d'entraînement (8).

17. Véhicule satellite selon l'une des revendications 1 à 16, **caractérisé en ce que** le mouvement du câble remorqué est soutenu par un entraînement à roues à friction, le démarrage et l'arrêt de ce déplacement se faisant par le câble (6) placé obliquement, par l'intermédiaire d'un interrupteur actionné par celui-ci.

18. Véhicule satellite selon l'une des revendications 1 à 17, **caractérisé en ce que** le montage en palier de rotation des roues d'entraînement et d'appui (9, 10) est prévu d'une façon permettant le déplacement vertical dans le chariot (1), afin de s'adapter aux conditions du sol, au moyen de pressions hydrauliques ou fournies par des ressorts.
